# EUROPEAN PATENT SPECIFICATION

(11) **EP 2 021 155 B1**
(45) Date of publication and mention of the grant of the patent: **27.03.2013**
(21) Application number: 06766304.7
(22) Date of filing: 26.05.2006
(51) Int. Cl.: B28D 1/08, B23D 55/08, B28D 7/02, B28D 1/12, B23D 53/00

(54) **APPARATUS FOR CUTTING GRANITE BLOCKS INTO SLABS BY MEANS OF DIAMOND STEEL BAND**
VORRICHTUNG ZUM SCHNEIDEN VON GRANITBLÖCKEN ZU PLATTEN MITTELS EINES DIAMANTSTAHLBANDS
APPAREIL DESTINÉ À COUPER DES BLOCS DE GRANIT EN PLAQUES AU MOYEN D'UNE BANDE D'ACIER DIAMANTÉ

(43) Date of publication of application: 11.02.2009
(73) Proprietor: Sawtech Machine S.r.l., 25037 Pontoglio (BS) (IT)
(72) Inventor: Azzini, Gianpaolo, 46030 Virgilio (Mantova) (IT)
(74) Representative: Carloni, Franco
(86) International application number: PCT/IT2006/000399
(87) International publication number: WO 2007/138618

(56) References cited:
- EP-A- 1 234 629
- GB-A- 191 229 443
- IT-B- 1 247 164
- JP-A- 60 155 316
- US-A- 4 191 159

## Description

### Technical field

The present invention is concerned with the stone processing field, and relates to an apparatus for cutting granite blocks into slabs.

An apparatus for cutting granite blocks into slabs is known from JP 60 155316 A which discloses two driving flywheels and at least one guiding blade having two parallel guiding edges, a central dividing slot in which a diamond cutting tool slides, said cutting tool comprising a plurality of cutting tip and connected together by closed loop connecting means, wherein said closed loop connecting means are made of a steel belt of suitable length, width and thickness, the ends of which are connected to form a closed loop.

The industrial field of the extraction and processing of granite greatly developed over the years and is in continuous evolution, involving and expanding number of applications.

The granite working process starts in a quarry where big stone blocks are extracted and transported in the working facilities, where the working process begins with a first cut of the block into slabs. Then at least one surface of each slab is polished and finally cut to create tile, kitchen tops, decorative slabs and other.

The first phase of cutting the block into slabs is a very slow, critical and problematic operation representing a technological challenge for decades.

In fact, the current block cutting technology implies the use of the so called granite gang saw featuring a plurality of parallel steel blades, tensioned inside a large rectangular frame aimed by a slow reciprocating motion guided by a huge crankshaft system. The cut is obtained by an abrasive material, called grit (small cast iron spheres) suspended in an abundant water flow. The moving frame descends vertically guided, digging grooves in the granite, equal to the thickness of the blades with a cutting speed often below 2-3 cm per hour in case of hard materials.

The cutting proceeds at an excessively slow speed producing impressive quantities of mud which requires special recycling treatment.

The difficulty of the process is not limited to the time or cost, in fact the accuracy of the cut has great influences on cost of the subsequent procedures, especially if the resulting slabs does not have enough parallelism because it heavily aggravates the cost of the polishing process by significantly slowing the process as well as increasing the cost of the diamond tools necessary to flatten the slab surface.

Almost all the manufactures of machinery and tools in this field are trying to use diamond tools to improve the efficiency of the granite block cutting process.

Among those attempts, the only alternative to the gigantic traditional granite gang saw is the technology using the saw called wire beads wherein the diamond cutting edge is a bead threaded on a wire. The diamond wire, if suitably tensioned and dragged into the material, has proved to reach easily a cutting speed up to four times faster than conventional gang saw, additionally is used with lighter machines and eliminates as well the costly recycling treatments of the mud.

This technique, despite some drawbacks and limitations hereinafter described, is becoming successful and is growing rapidly.

Machines with fifty wires have been developed capable of simultaneously cutting big blocks into slabs with cutting speeds up to five times faster than traditional frames.

Recently, a machine has been developed wherein the tool features a plurality of tool holders with brazed cutting tips, linked together by a steel wire, sliding at high speed and guided into a guiding blade suitably tensioned and capable to provide to each tool holder an accurate transversal and vertical guidance Each tool holder features brazed diamond cutting tip and cooperates with the guiding blade suitably tensioned giving to the running tool holders a steady vertical and transversal guide. A close loop guiding ring allows the re-circulation of the tool holders.

Each cutting tip individually proceeds, and is well guided and properly cooled, and transits at an optimal speed, thus permitting a high efficiency and cutting accuracy to be obtained.

### Prior art

Italian patent application PC 2003 A 000031, filled on July 21st 2003 titled "Apparatus for cutting granite blocks into slabs" illustrates in details this machine.

Unfortunately, this machine despite being the most advanced in its field shows some limitations and deficiencies yet to be improved. For example, the return circuit of the tool holders is full of unavoidable discontinuities that create shocks, noise, and wear out the tool holders quickly. Furthermore, should a single tool holder get out of track and loose orientation, the traction wire brakes, thus resulting in a poor system reliability.

Another inherent limitation is the fact that a variation of a distance between the circuits is still problematic in case the operator wants to change the thickness of the slabs because the flywheels and the circuits would require difficult settings.

The main object of this invention is to provide a simple and reliable apparatus for cutting granite blocks into slabs wherein a diamond tool cooperates with a guiding blade while transiting inside the granite block.

Another object of this invention is to provide a multi blade apparatus with several circuits capable of easily changing the thickness of the slabs resetting the distance between the cutting circuits.

A further object of this invention is to provide an apparatus wherein the diamond tool is easy to set and replace.

### Disclosure of the invention

The present invention achieves these and other objects with a granite block cutting apparatus featuring tools comprising of a plurality of tool holders with brazed cutting tips connected together by a close loop connecting means running at high speed inside guiding blades designed to provide to the tool holders an accurate transversal and vertical guide while transiting inside the granite block to according the following claims.

According to a feature of the present invention the apparatus comprises also a devise adapted to change the distance between the circuits, thus permitting the apparatus to achieve a high degree of flexibility.

### Brief description of the drawings

The present invention will be now better described by means of the attached figures wherein:
- Figure 1 is a front view of the cutting apparatus and its relative belt tool;
- Figures 2A, 2B and 2C are details of the diamond tool used in the apparatus of Figure 1;
- Figures 3A, and 3B are sectional views of the guiding blades cooperating with the tool of Figure 2 in the cutting area;
- Figure 4 is a variant of the belt and the guiding blade according to the present invention;
- Figure 5 is a front view of a variant of a multi tool apparatus which allows to change the distance between the tools.

### Best mode of carrying out the invention

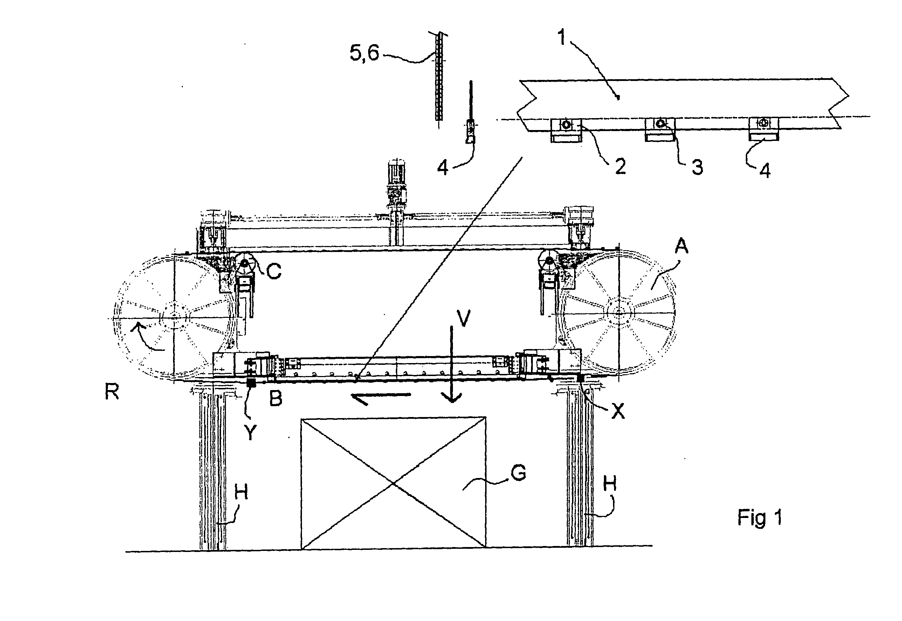

In Figure 1 is shown a single blade apparatus similar to the one described in the above- mentioned Italian patent application wherein the close loop tool circulates pulled by the motorized wheel A rotating in the R direction guiding the tool at cutting speed B.

When the tool enters the granite, a straight blade offers to the tool a vertical and transversal guide. The combination of cutting speed B and vertical motion V allows the tool to cut the granite block G laying in a stationary position between the two columns H. The tool is basically comprising a spring steel belt 1 to which are attached a plurality of tool holders 2 by means of a central pin 3.

A sintered, parallelepiped shaped, diamond cutting tip 4 with a truncated conical section is applied to each tool holders. The figure shows also a partial transversal section of the bottom of the guiding blade inside which the tool slides when transiting into the granite.

It is to be noted that the apparatus in Figure 1 features flywheels with horizontal rotation axes while the blade moves vertically (V) in a plane perpendicular to those axes, as a result, belt 1 is required to rotate of ninety degrees from horizontal immediately before (input) and after (output) the belt transits into the guiding blade.

This rotation is performed by X and Y rollers.

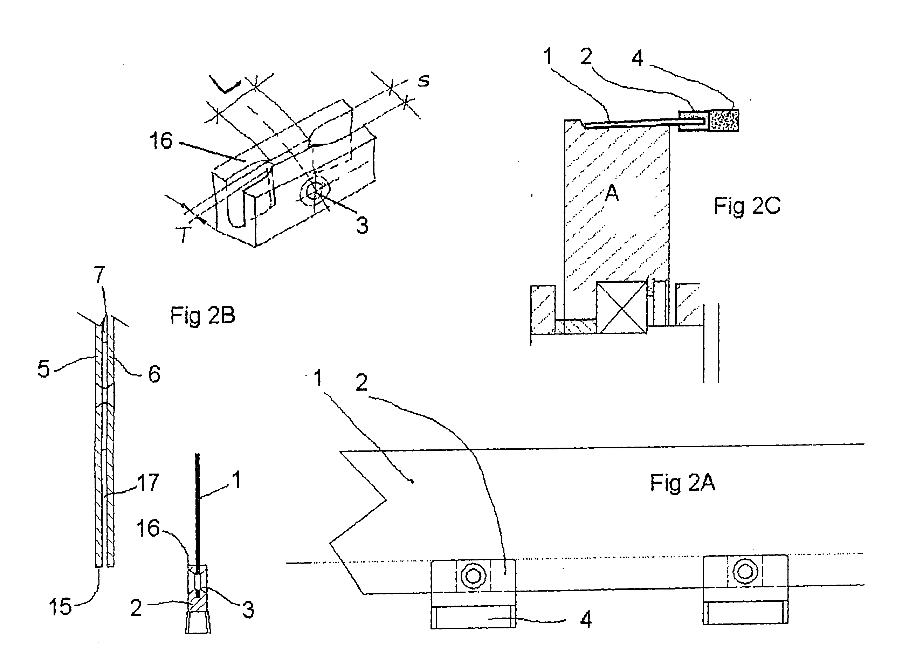

Figure 2A shows an enlarged view of the described tool while figure 2B shows more clearly by means of a sectional view how the tool and the guiding blade are built.

In particular it is shown how the belt 1 partially enters in a longitudinal slot on the upper surface of the tool holder 2 to which is attached by means of a central pin 3.

The tool holder is sketched in an isometric view where it is possible to note the upper slot with width T, lightly thicker than the connecting belt 1, in the tool holder central portion L while the slot features width S slightly larger in the outer sections to facilitate a free deflection of the belt while winding on the flywheels and or on the directional pulleys A shown in fig 2C.

The slot T splits the tool holder 2 upper portion of the tool holder tool in two surfaces 16.

The guiding blade is typically composed by a three layer sandwich out of which two are external elements 5 and 6 and one is internal element 7, all connected by connecting pins (not shown in the Figure). It is to be noted that the height of the connecting central element 7 is reduced compared to the side elements 5 and 6, thus defining a cavity 17 located in the bottom area of the guide featuring a rectangular cross-section inside which, as better described hereinafter, the belt 1 transits. Element 7 allows the bottom ends of elements 5 and 6 to feature two support tips 15 intended to cooperate with the corresponding surfaces 16 of each tool holder.

The combined effect of belt 1 running inside the cavity 17 of the guiding blade and the tool holder surfaces 16 sliding against the blade tip 15 offers the transiting tool holders and their cutting tip a double vertical and transversal guide securing a good quality cut.

It is important to point out that if each cutting tip is axially coupled to the corresponding tool holder, each cutting tip will contact the granite frontally as well as on both sides.

With some materials, the cutting tip are intentionally applied with a small offset to allow the cutting edge to stick out more from one side than the other one. Installing the tool holders in such arrangement according to a left-right sequence, a cutting tool is obtainable whereby each cutting tip cuts frontally and on one side only thus minimizing the pulling friction.

Figure 2C shows the typical groove shape of the pulleys and driving flywheels of the tool. It is to be noted that the tool is dragged only by belt 1 as the tool holder and its cutting tips are externally protruding.

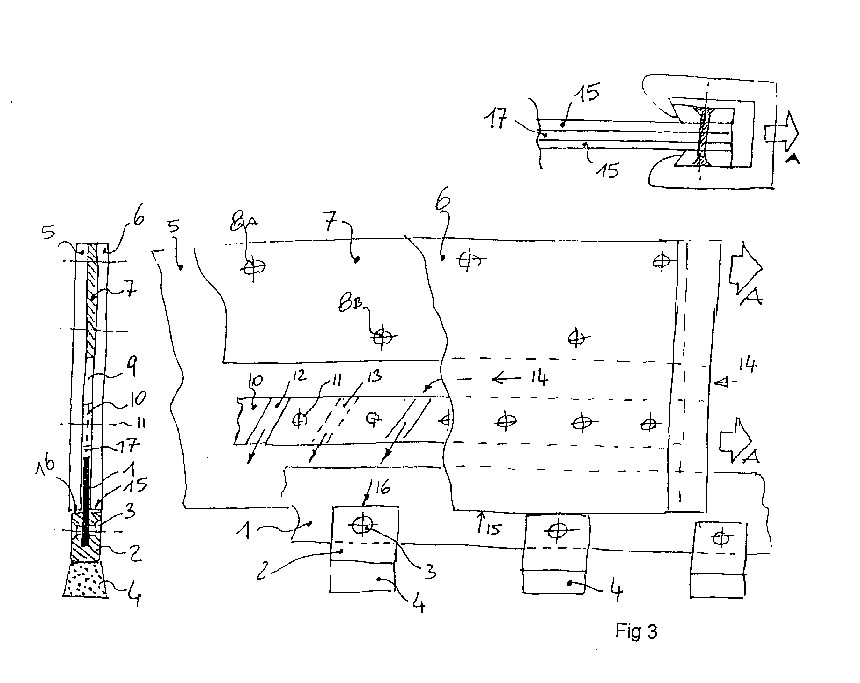

In Figure 3 it is shown a section of the belt tool and guiding blade assembly. In particular, there are shown the belt 1, the tool holder, the cutting edge 4, the guiding blade made by a three layer sandwich with two external side elements 5 and 6 and an internal element 7, the thickness of which is slightly greater than that of the belt 1. Said three elements are connected together for example by a plurality of connecting means 8A and 8B. More in details the internal element is actually composed of an upper layer 7 and an internal strip 10 featuring the identical thickness. Strip 10, defines an internal passage inside the guiding blade for the supply of cooling liquid through the cut outs 12 and 13 which channels the fluid from the central passage 9 toward the running tool holders. The cooling fluid is supplied from both sides of the blade as shown by arrow 14. Top portion of Figure 3 shows how the sandwiched guiding blade is connected to the machine frame and tensioned along direction A. If observed from the bottom, the guiding blade features to side guiding edges 15 adapted to cooperate with the tool holder surfaces 16 as well as a central slot 17 which is adapted to house and guide the portion of belt 1 extending from the top edge 16 of the tool holders (only a portion of the belt 1 is engaged inside the cavity 17 of the guiding blade).

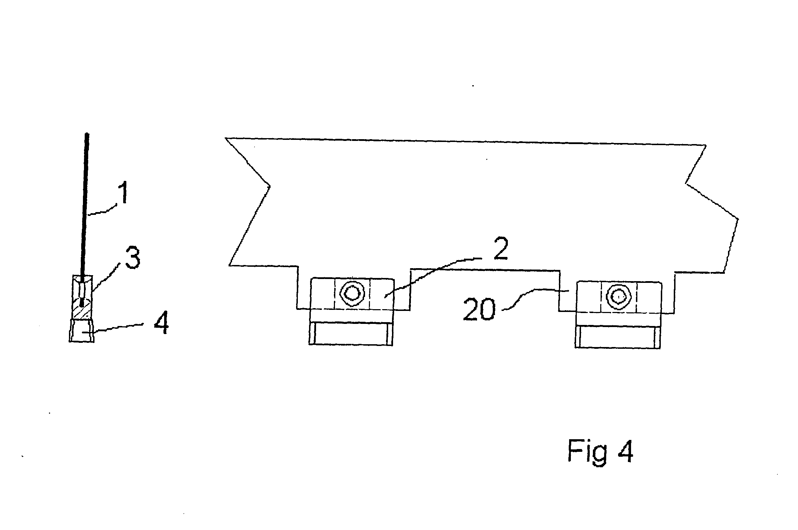

In Figure 4 there is shown a structural variant of belt 1 in which the belt features protrusions 20 arranged at the position where tool holders 2 are applied. This design allows the belt 1 to face less stress when winding on the flywheels as shown in Fig. 2C.

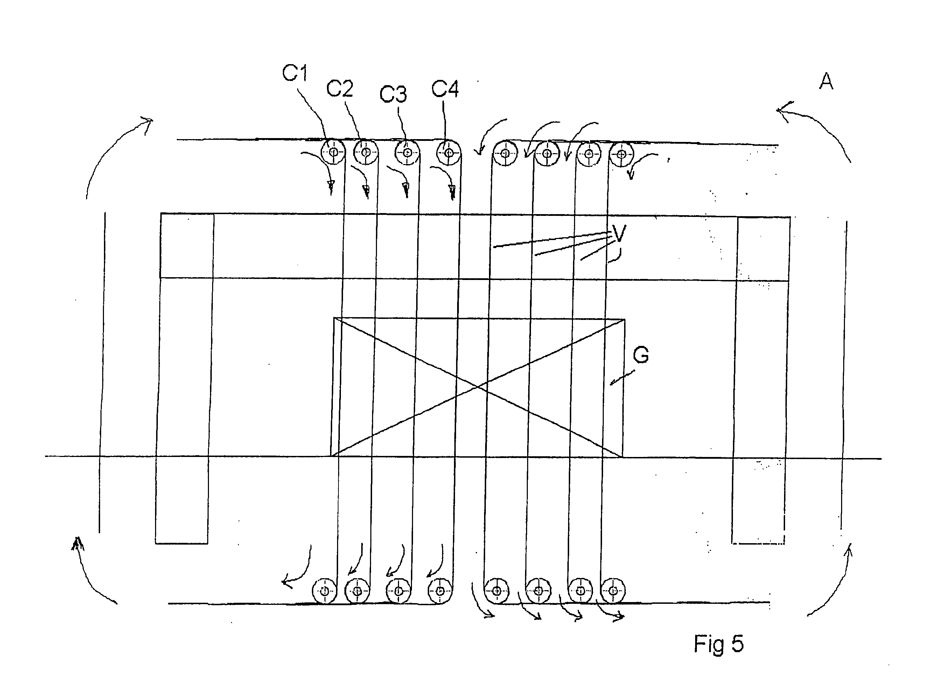

Figure 5 shows a variant of the apparatus which is different from that shown in Figure 1 in that the blades are arranged vertically. In this multi blade apparatus, the flywheels A, C1, C2 etc., features horizontal rotating axes while the blade moves transversally on a plane parallel to these axes, belt 1 does not require a ninety degrees rotation. This design allows to build an apparatus with a fixed frame and wherein the piece G moves toward the guiding blades. The main advantage of this design is the possibility to create a multi blade machine where it is easy to change the distance between the blades.

The operation of the apparatus is identical to what described in the above-mentioned Italian patent application and is based on mounting the diamond cutting tips on a plurality of tool holders connected by a close loop steel belt also acting as a transversal guide and driving element. A tensioning frame is provided onto which parallel blades are mounted and individually tensioned, each offering a vertical and transversal rigid, as well as lubricated guide for the running tool holders. The combined effect of the rotation of the motorized drum and the relative motion between the frame and the stationary guiding blades allows the cutting tip to proceed individually well guided, cooled and at an optimal running speed thus achieving maximum efficiency and cutting accuracy.

From what is described above it is evident that the present invention reaches the aimed objectives and particularly it has the following advantages:
- The belt is representing a simple and reliable tool holder driving means
- The belt is suitable for cooperating with the guiding blade giving to each tool holders an optimal transversal guide;
- The tool is well guided and descends in a well defined plane, allowing a good quality slab in terms of superior allowances;
- Maintenance is greatly simplified as the belt can be easily disassembled, the damaged tool holder can easily be individually replaced and the diamond cutting tips can easily be connected to the tool holders;
- The apparatus does not require the use of cast iron grit and produces a much smaller amount of mud which is easier to recycle with a big advantage to the environment.

Of course the described embodiments are presented only as an example and it is possible to apply modifications from a field expert within the scope of the claims.

## Claims

1. Apparatus for cutting granite blocks (G) into slabs, including two driving flywheels (A) and at least one guiding blade (5-7) having two parallel guiding edges (5,6), a central dividing slot (7) in which a diamond cutting tool slides, said cutting tool comprising a plurality of tool holders (2), each provided with a cutting tip (4) and connected together by closed loop connecting means (1), the tool holders (2) being driven by two motorized flywheels (A) and being vertically and transversally guided by said guiding blade inside the granite block (G) wherein:
- said closed loop connecting means (1) between the tool holders (2) are made of a steel belt (1) of suitable length, width and thickness, the ends of which are connected to form a closed loop;
- each tool holder (2) comprises a rectangular body of suitable height, having a flat upper surface and lower surface, the upper surface being provided with a longitudinal slot with a thickness (T) which is slightly larger than the thickness of the belt (1) and a depth which is equal to approximately 2/3 of the height of the tool holder (2), the upper surface being divided into two halves creating two distinct support surfaces (16) and said slot housing the lower portion of the driving belt (1) which is inserted for a portion of its height, while the lower surface is parallel to the upper surface and receives the diamond cutting tip (4) and has a width which is equal or slightly greater than the tool holders (2);
- the assembly comprising the cutting tip (4) applied to the lower surface of each tool holder (2), the tool holders (2) connected to the driving belt (1) by suitable connecting means and the close loop belt (1) forming a diamond tool which is driven by the flywheels (A) which cooperate with said guiding means (5-7) in the area interacting with the granite block (G) so that both supporting upper surfaces (16) of the tool holder (2) slide against the guiding edges (15) of a blade receiving support and vertical guide (15) while the portion of the belt (1) projecting from the tool holders (2) enters the central slot (17) of the guiding blade (5-7) and is transversally guided from the internal walls of said slot (17) the combining effects of the vertical guide through said support surfaces of the tool holders (2) and transversal guide through the belt (1) cooperating with the central slot (17) of the guide allowing the tool holders (2) to transit inside the granite block (G) and imparting to the diamond cutting tips (4) connected to the tool holders (2) an optimal straight path.

2. Apparatus according to claim 1, wherein said connecting means connecting each tool holder (2) to the driving belt (1) comprise a pin (3) interposed between said upper and lower surfaces of the tool holder, with the axis parallel to said surfaces, the stem of the pin passing through the two halves of the tool holder and the belt housed therein allowing the driving of each tool holder.

3. Apparatus according to claim 1, wherein said connecting means connecting each tool holder (2) to the driving belt (1) are a weldment

4. Apparatus according to claim 1, wherein said connecting means connecting each tool holder (2) to the driving belt (1) comprise a dovetail mechanical joint embedded in a suitable gluing material.

5. Apparatus according to claim 1, wherein said slot in each tool holder (2) adapted to house the driving belt exhibits a central portion with a width slightly greater than the thickness of the belt and two sides with a width which is greater than the central portion allowing the belt (1) to freely deform in an arc-like shape while winding on the traction flywheels, the widened portions increasing the driving belt resistance to fatigue during the operation.

6. Apparatus according to claim 1, wherein the cutting edge (4) exhibits a substantially wedge shape with a lower base having a width which is equal or greater than the width of the tool holder (2) onto which it is applied.

7. Apparatus according to one of the above-mentioned claims, wherein each tool holder (2) is provided with a diamond cutting tip connected to said lower surface and protruding from the body of the tool holder (2) more from one side than the other, thus allowing the two tool holders (2) to be mounted with the cutting edge (4) protruding alternatively on the left and on the right in a left/right sequence with respect of the edge of each tool holder (2) so that each cutting edges (4) cuts on the head and one side only and avoids to cut and scrape on both sides while advancing in the granite, thus minimizing the necessary dragging force of the tool holders, optimizing the cutting tip life and performing a straight cut.

8. Apparatus according to one of the above-mentioned claims, wherein said driving belt features a protruding area (20) arranged at each position in which a tool holder (2) is received, said protruding area (20) having a rectangular shape and being provided with a central hole for the pin (3) connecting to the tool holder (2), thus leaving a wide section of the belt unaffected during the winding around the flywheels.

9. Apparatus according to one of the above-mentioned claims, wherein the belt is provided with suitable scraping means which are arranged at the area between two consecutive tool holders (2) and protect the guiding tip of the blade by avoiding quartz crystals or abrasive impurities to settle between the cooperating surfaces of the tool holders and the guiding blade.

10. Apparatus according to claim 9, wherein said scraping means are made with a piece of rubber, with a substantially rectangular shape featuring an upper slot to receive the edge of the dragging belt, allowing to fill with rubber the free area between two consecutive tool holders with a piece of rubber reproducing the section of the tool holder occluding the access to the impurities to the active guiding surfaces of the guiding blade.

11. Apparatus according to one of the above-mentioned claims, wherein the tool holder (2) and the cutting tips (4) are form integrally in a single piece which is obtained by sintering metallic powders to desired shape, with the lower cutting area featuring in addition to the metallic powders, a desired concentration of diamond crystals to give the tool holder (2) a cutting capacity.

12. Apparatus according to claim 1, wherein said guiding blade is provided inside with a plurality of lined up wheels intended to cooperate with the free upper edge of the driving belt for allowing the tool holders (2) to be vertically guided by the belt during the transit inside the guiding blade, instead of the upper surfaces support against the guiding edges, thereby considerably reducing the dragging as a result of the friction changing from static to rolling.

13. Apparatus according to claim 1, wherein each dragging flywheel and each free wheel present in each cutting circuit are provided with an inclined groove receiving the portion of belt protruding from the tool holders allowing the belt to wind on the wheel leaving the tool holders and the respective cutting tip to protrude on the side, allowing silent and reliable belt rotation.

14. Apparatus according to claim 1, wherein said driving flywheels rotate on a horizontal axis while the guiding blade/blades work vertically with the granite cut being performed by a relative movement of the blades toward the block on a plane perpendicular to the flywheels rotation axes, the belt requiring to be oriented respectively from horizontal to vertical between the input flywheel and the blade and from vertical to horizontal after the output and before winding back on the flywheel with this double orientation of the belt being performed by opportune orientation means placed in those areas.

15. Apparatus according to claim 14, wherein said orientation means consist in at least one roller operating like a directing roller in the traditional belt saws for steel bar cutting.

16. Apparatus according to claim 1, wherein the driving flywheels have a horizontal rotation axis and the guiding blade/blades are arranged horizontally with the granite cut being performed by a relative movement of the blades toward the block on a plane parallel to the flywheels rotation axes, this arrangement not requiring said belt orientation means and allowing to build multi blade cutting systems with the possibility of easily change the distance between the blades and consequently the thickness of the slabs.

17. Apparatus according to claims 13 or 15, wherein the cut is performed by means of the blade moving toward stationary granite block or vice versa.

## Patentansprüche

1. Vorrichtung zum Schneiden von Granitblöcken (G) zu Platten, die zwei Triebschwungräder (A) und mindestens ein Führungsblatt (5-7) mit zwei parallelen Führungskanten (5,6), einem mittleren Trennspalt (7), in dem ein Diamantschneidwerkzeug gleitet, umfasst, wobei das Diamantschneidwerkzeug eine Vielzahl von Werkzeughaltern (2) aufweist, ein jeder davon mit einer Schneidkante (4) versehen und durch geschlossene Ringverbindungsmittel (1) miteinander verbunden, wobei die Werkzeughalter (2) durch zwei motorisierte Schwungräder (A) angetrieben und im Granitblock (G) mittels des Führungsblatts senkrecht und quer geführt werden, worin
- die geschlossenen Ringverbindungsmittel (1) zwischen den Werkzeughaltern (2) aus einem Stahlband (1) von geeigneter Länge, Breite und Dicke hergestellt sind, deren Endteile zur Bildung eines geschlossenen Ringes verbunden sind;
- jeder Werkzeughalter (2) aus einem rechteckigen Körper geeigneter Höhe, mit einer flachen Oberfläche und einer Unterfläche besteht, wobei die Oberfläche mit einem Längsspalt von einer Dicke (T), die um weniges größer ist als diejenige des Stahlbands (1) und einer Tiefe, die ungefähr 2/3 der Höhe des Werkzeughalters (2) entspricht, versehen ist, wobei die Oberfläche in zwei Hälften unterteilt ist und zwei getrennte Auflageflächen (16) bildet und der Spalt den unteren Teil des Triebstahlbandes (1) aufnimmt, das zu einem Teil seiner Höhe darin aufgenommen ist, während die Unterfläche parallel zur Oberfläche liegt und die Diamantschneidspitze (4) aufnimmt und eine Breite hat, die derjenigen der Werkzeughalter (2) gleich oder etwas größer ist;
- die Gruppe aus der Diamantschneidspitze (4), die auf der Unterfläche eines jeden Werkzeughalters (2) angebracht ist, den Werkzeughaltern (2) besteht, die mit dem Triebstahlband (1) mittels geeigneter Verbindungsmittel verbunden sind und das geschlossene Ringstahlband (1) ein Diamantschneidwerkzeug bildet, das von den Schwungrädern (A) angetrieben wird, die mit dem Führungsmittel (5-7) in dem aufeinander einwirkenden Bereich mit dem Granitblock (G) zusammenwirken, so dass beide Tragflächen (16) des Werkzeughalters (2) gegen die Führungskanten (15) eines ein Blatt und eine senkrechte Führung (15) aufnehmenden Trägers gleiten, während der von den Werkzeughaltern (2) hervorstehende Teil des Stahlbandes (1) in den Mittenspalt (17) des Führungsblatts (5-7) eindringt und von den Innenwänden des Mittenspalts (17) der Führung quer geführt wird, wobei die Kombinationseffekte der senkrechten Führung durch die Tragflächen der Werkzeughalter (2) und die Querführung durch das mit dem Mittenspalt (17) der Führung zusammenarbeitenden Stahlbands (1) den Durchgang der Werkzeughalter (2) durch den Granitblock (G) ermöglichen und dadurch den mit den Werkzeughaltern (2) verbundenen Diamantschneidspitzen (4) eine optimale gradlinige Bahn erteilen.

2. Vorrichtung nach Anspruch 1, worin die einen jeden Werkzeughalter (2) an das Triebstahlband (1) anschließenden Verbindungsmittel eine zwischen der Ober- und der Unterfläche des Werkzeughalters mit der Achse parallel zu den Flächen angebrachte Niete (3) aufweisen, wobei der Schaft der Niete die beiden Hälften des Werkzeughalters durchgreift und das darin angebrachte Stahlband den Antrieb eines jeden Werkzeughalters ermöglicht.

3. Vorrichtung nach Anspruch 1, worin die einen jeden Werkzeughalter (2) an das Triebstahlband (1) anschließenden Verbindungsmittel angeschweißt sind.

4. Vorrichtung nach Anspruch 1, worin die einen jeden Werkzeughalter (2) an das Triebstahlband (1) anschließenden Verbindungsmittel aus einer in einen geeigneten Kleber eingebettete mechanische Schwalbenschwanzverbindung bestehen.

5. Vorrichtung nach Anspruch 1, worin der Spalt in jedem Werkzeughalter (2), zur Aufnahme des Triebstahlbandes, einen Mittenteil mit einer etwas größeren Breite als der Dicke des Stahlbands und zwei Seiten mit einer größeren Breite als der Mittenteil aufweist, womit das Stahlband (1) sich während des Aufwickelns auf die Schwungräder bogenförmig frei verformen kann, wobei die erweiterten Teile die Ermüdungsfestigkeit des Triebstahlbandes während des Betriebes erhöhen.

6. Vorrichtung nach Anspruch 1, worin die Diamantschneidspitze (4) im wesentlichen keilförmig ist und eine Grundfläche aufweist, deren Breite derjenigen des Werkzeughalters (2), auf den sie angebracht ist, gleich oder größer ist.

7. Vorrichtung nach einem der vorhergehenden Ansprüche, worin jeder Werkzeughalter (2) mit einer Diamantschneidspitze versehen ist, die mit der Unterfläche verbunden ist und vom Körper des Werkzeughalters (2) mehr auf einer Seite als auf der anderen hervorsteht, wodurch die zwei Werkzeughalter (2) mit der Schneidspitze (4) abwechselnd von der linken und der rechten Seite hervorstehend mit einer Links-/Rechtsfolge gegenüber der Kante eines jeden Werkzeughalters (2), eingebaut werden können, so dass jede Schneidspitze (4) am Kopf und nur eine Seite beschneidet und während des Vorrückens im Granit das Schneiden und Schaben auf beiden Seiten vermieden und auf diese Weise die nötige Schleppkraft der Werkzeughalter aufs geringste gebracht wird, was die Lebensdauer der Schneidspitzen optimal verbessert und das Ausführen eines graden Schnitts gestattet.

8. Vorrichtung nach einem der vorhergehenden Ansprüche, worin das Triebstahlband einen vorstehenden Abschnitt (20) aufweist, der in jeder einen Werkzeughalter (2) aufnehmenden Position angeordnet ist, wobei der vorstehende Abschnitt (20) eine Rechteckform hat und mit einer Mittenbohrung für die mit dem Werkzeughalter (2) verbindende Niete (3) versehen ist, wodurch ein großer Abschnitt des Triebstahlbandes während des Aufwickelns auf die Schwungräder unberührt bleibt.

9. Vorrichtung nach einem der vorhergehenden Ansprüche, worin das Triebstahlband mit geeigneten Schabmitteln versehen ist, die im Bereich zwischen zwei aufeinanderfolgende Werkzeughalter (2) angeordnet sind und die Führungsspitze des Blatts abschirmen, wobei ein Ablagern von Quarzkristallen oder Schleifabfall zwischen den zusammenarbeitenden Flächen der Werkzeughalter und des Führungsblatts vermieden wird.

10. Vorrichtung nach Anspruch 9, worin die Schabmittel aus einem Gummistück von einer im wesentlichen rechteckigen Form mit einem oberen Spalt zur Aufnahme der Kante des Transportbandes hergestellt sind, um den freien Raum zwischen zwei aufeinanderfolgenden Werkzeughaltern mit einem Gummistück ausfüllen zu können, das den Querschnitt des Werkzeughalters nachbildet und den Zugang von Fremdkörpern zu den aktiven Führungsflächen des Führungsblatts versperrt.

11. Vorrichtung nach einem der vorhergehenden Ansprüche, worin der Werkzeughalter (2) und die Schneidspitzen (4) integral in einem Stück geformt sind, das mittels Sintern von Metallpulvern in einer gewünschten Form erhalten wird, wobei der untere Schneidbereich zusätzlich zu den Metallpulvern eine gewünschte Konzentrierung von Diamantkristallen aufweist, um dem Werkzeughalter (2) Schneidfähigkeit zu verleihen.

12. Vorrichtung nach Anspruch 1, worin das Führungsblatt innen mit einer Vielzahl von fluchtgerechten Rädern ausgestattet ist zwecks Zusammenarbeiten mit der freien Oberkante des Triebstahlbandes, damit die Werkzeughalter (2) mittels des Stahlbands während des Durchgangs innen im Führungsblatt senkrecht geführt werden können, anstatt einer Abstützung der Oberflächen auf den Führungskanten, wobei die Mitnahme wesentlich verringert wird insofern als die Reibung von einer Ruhereibung in eine Wälzreibung umgewandelt wird.

13. Vorrichtung nach Anspruch 1, worin jedes in jedem Schneidkreis vorhandene Mitnahmeschwungrad und jedes Freilaufrad mit einer geneigten Rille zur Aufnahme des von den Werkzeughaltern hervorstehenden Stahlbandteils aufweisen, wodurch das Aufwickeln des Stahlbands auf das Freilaufrad ermöglicht wird und dabei die Werkzeughalter sowie die respektive Schneidspitze seitlich hervorstehen lässt, was ein geräuschloses und zuverlässiges Drehen des Bandes gestattet.

14. Vorrichtung nach Anspruch 1, worin sich die Triebschwungräder auf einer horizontalen Achse drehen während das Führungsblatt/die Führungsblätter senkrecht zum Granitschnitt arbeiten, der mit einer Relativbewegung der Sägeblätter zum Block auf einer zu den Drehachsen der Schwungräder senkrechten Ebene ausgerührt wird, wobei das Stahlband notwendigerweise von horizontal auf vertikal zwischen dem Eingangsschwungrad und dem Blatt, beziehungsweise von vertikal auf horizontal nach dem Ausgang und bevor es sich erneut auf das Schwungrad aufwickelt, zu schwenken ist, wobei die Doppelschwenkung des Stahlbands mittels in diesen Bereichen angeordneten geeigneten Schwenkmitteln ausgeführt wird.

15. Vorrichtung nach Anspruch 14, worin die Schwenkmittel aus mindestens einer Rolle bestehen, die wie eine Schwenkrolle in den herkömmlichen Bandsägen zum Stahlstabschneiden arbeitet.

16. Vorrichtung nach Anspruch 1, worin die Triebschwungräder eine waagrechte Drehachse haben und das Führungsblatt/die Führungsblätter horizontal angeordnet sind mit einem durch eine Relativbewegung der Blätter zum Block hin auf einer parallelen Ebene zu den Schwungraddrehachsen ausgeführten Granitschnitt, wobei diese Anordnung keine Schwenkmittel für das Stahlband erfordert und die Verwirklichung von Multiblatt-Schneidsystemen gestattet mit der Möglichkeit, den Blattabstand und folglich die Plattendicke auf einfache Weise zu ändern.

17. Vorrichtung nach Anspruch 13 oder 15, worin der Schnitt mittels des Sägeblatts durchgeführt wird, das sich zum feststehenden Granitblock hin, oder umgekehrt, bewegt.

## Revendications

1. Dispositif de coupe de blocs (G) de granit en dalles, comprenant deux volants (A) d'entraînement et au moins une lame (5 à 7) de guidage, ayant deux bords (5, 6) parallèles de guidage, une fente (7) centrale de division, dans laquelle glisse un outil coupant en diamant, l'outil coupant comprenant une pluralité de porte-outils (2), pourvus chacun d'une pointe (4) coupante et reliés ensemble par des moyens (1) de liaison en boucle fermée, les porte-outils (2) étant entraînés par deux volants (A) motorisés et étant guidés verticalement et transversalement par la lame de guidage au sein du bloc (G) de granit, dans lequel
- les moyens (1) de liaison en boucle fermée entre les porte-outils (2) sont faits d'un ruban (1) d'acier de longueur, largeur et épaisseur appropriées, dont les extrémités sont reliées pour former une boucle fermée ;
- chaque porte-outil (2) comprend un corps rectangulaire d'une hauteur appropriée, ayant une surface supérieure et une surface inférieure plates, la surface supérieure étant pourvue d'une fente longitudinale d'une épaisseur (T), qui est légèrement plus grande que l'épaisseur du ruban (1), et d'une profondeur, qui est égale à peu près aux 2/3 de la hauteur du porte-outil (2), la surface supérieure étant subdivisée en deux moitiés créant deux surfaces (16) de support distinctes et la fente logeant la partie inférieure du ruban (1) d'entraînement qui est insérée pour une partie de sa hauteur, tandis que la surface inférieure est parallèle à la surface supérieure et reçoit la pointe (4) coupante en diamant et a une largeur qui est égale ou légèrement supérieure à celle des porte-outils (2) ;
- l'ensemble comprenant la pointe (4) coupante appliquée à la surface inférieure de chaque porte-outil (2), les porte-outils (2) reliés au ruban (1) d'entraînement par des moyens de liaison appropriés et le ruban (1) en boucle fermée formant un outil en diamant, qui est entraîné par les volants (A), lesquels coopèrent avec les moyens (5 à 7) de guidage dans la zone d'interaction avec le bloc (G) de granit, de manière à ce que les deux surfaces (16) de support du porte-outil (2) glissent sur les bords (15) de guidage d'un support de réception d'une lame et d'un guide (15) vertical, alors que la partie du ruban (1) faisant saillie des porte-outils (2) pénètre dans la fente (17) centrale de la lame (5 à 7) de guidage et est guidée transversalement à partir des parois intérieures de la fente (17), les effets combinés du guidage vertical par les surfaces de support des porte-outils (2) et du guidage transversal par le ruban (1) coopérant avec la fente (17) centrale du guide permettant au porte-outil (2) de passer à l'intérieur du bloc (G) de granit et donnant aux pointes (4) coupantes en diamant reliées au porte-outil (2) un trajet rectiligne optimum.

2. Dispositif suivant la revendication 1, dans lequel les moyens de liaison reliant chaque porte-outil (2) au ruban (1) d'entraînement comprennent une goupille (3) interposée entre les surfaces supérieure et inférieure du porte-outil en ayant l'axe parallèle aux surfaces, la tige de la goupille passant dans les deux moitiés du porte-outil et le ruban qui y est logé permettant l'entraînement de chaque porte-outil.

3. Dispositif suivant la revendication 1, dans lequel les moyens de liaison reliant chaque porte-outil (2) au ruban (1) d'entraînement sont une construction soudée.

4. Dispositif suivant la revendication 1, dans lequel les moyens de liaison reliant chaque porte-outil (2) au ruban (1) d'entraînement comprennent un joint mécanique en queue d'aronde incorporé dans une matière de collage appropriée.

5. Dispositif suivant la revendication 1, dans lequel la fente dans chaque porte-outil (2) conçue pour loger le ruban d'entraînement a une partie centrale d'une largeur légèrement plus grande que l'épaisseur du ruban et deux côtés d'une largeur qui est plus grande que la partie centrale, ce qui permet au ruban (1) de se déformer librement suivant une forme semblable à un arc, alors qu'il s'enroule sur les volants de traction, les parties élargies augmentant la résistance du ruban d'entraînement à la fatigue pendant le fonctionnement.

6. Dispositif suivant la revendication 1, dans lequel le bord (4) coupant a un bord sensiblement en coin, ayant une base inférieure d'une largeur supérieure ou égale à la largeur du porte-outil (2) sur lequel il est appliqué.

7. Dispositif suivant l'une des revendications précédentes, dans lequel chaque porte-outil (2) est pourvu d'une pointe coupante en diamant reliée à la surface inférieure et faisant saillie du corps du porte-outil (2), davantage d'un côté que de l'autre, en permettant ainsi aux deux porte-outils (2) d'être montés en ayant le bord (4) coupant faisant saillie en alternance sur la gauche et sur la droite suivant une séquence gauche/droite par rapport au bord de chaque porte-outil (2), de sorte que chaque bord (4) coupant coupe sur la tête et d'un côté seulement et empêche de couper et de racler des deux côtés, tout en avançant dans le granit, en minimisant ainsi la force nécessaire de résistance à l'avancement des porte-outils, en optimisant la durée de vie de la pointe coupante et en effectuant une coupe droite.

8. Dispositif suivant l'une des revendications précédentes, dans lequel le ruban d'entraînement représente une zone (20) en saillie disposée en chaque position dans laquelle un porte-outil (2) est reçu, la surface (20) en saillie, ayant une forme rectangulaire, étant munie d'un trou central pour la goupille (3) se reliant au porte-outil (2), en laissant ainsi une section large du ruban non affectée pendant l'enroulement autour des volants.

9. Dispositif suivant l'une des revendications précédentes, dans lequel le ruban est pourvu de moyens de raclage appropriés, qui sont disposés dans la zone comprise entre deux porte-outils (2) consécutifs et protègent la pointe de guidage de la lame, en empêchant que des cristaux de quartz ou des impuretés abrasives se déposent entre les surfaces conjuguées des porte-outils et de la lame de guidage.

10. Dispositif suivant la revendication 9, dans lequel les moyens de raclage sont faits d'une pièce de caoutchouc d'une forme sensiblement rectangulaire ayant une fente supérieure pour recevoir le bord du ruban d'avancement, en permettant de remplir de caoutchouc la zone libre entre deux porte-outils consécutifs par une pièce de caoutchouc reproduisant la section du porte-outil empêchant l'accès des impuretés aux surfaces actives de guidage de la lame de guidage.

11. Dispositif suivant l'une des revendications précédentes, dans lequel le porte-outil (2) et les pointes (4) coupantes sont formés d'une seule pièce, qui est obtenue en frittant des poudres métalliques à la forme désirée, la zone inférieure de coupe ayant, en plus des poudres métalliques, une concentration souhaitée de cristaux de diamant, pour donner une capacité de coupe au porte-outil (2).

12. Dispositif suivant la revendication 1, dans lequel la lame de guidage est pourvue à l'intérieur d'une pluralité de roues alignées destinées à coopérer avec le bord supérieur libre du ruban d'entraînement, pour permettre au porte-outil (2) d'être guidé verticalement par le ruban pendant le passage à l'intérieur de la lame de guidage, au lieu que les surfaces supérieures viennent sur les bords de guidage, en réduisant ainsi considérablement la résistance à l'avancement due au changement de frottement de statique à roulement.

13. Dispositif suivant la revendication 1, dans lequel chaque volant d'avancement et chaque roue libre présente dans chaque circuit de coupe sont munis d'une rainure inclinée recevant la partie du ruban faisant saillie des porte-outils, en permettant au ruban de s'enrouler sur la roue, en laissant le porte-outil et la pointe coupante respective en saillie sur le côté, en permettant une rotation silencieuse et fiable du ruban.

14. Dispositif suivant la revendication 1, dans lequel les volants d'entraînement tournent sur un axe horizontal, tandis que la lame/les lames de guidage travaillent verticalement, alors que la coupe du granit est effectuée par un mouvement relatif des lames en direction du bloc sur un plan perpendiculaire aux axes de rotation des volants, le ruban devant être orienté respectivement de l'horizontale à la verticale entre le volant d'entrée et la lame et de la verticale à l'horizontale après la sortie et avant de se réenrouler sur le volant, cette orientation double du ruban étant effectuée par des moyens adéquats d'orientation placés dans ces zones.

15. Dispositif suivant la revendication 14, dans lequel les moyens d'orientation consistent en au moins un rouleau fonctionnant comme un rouleau directeur dans les scies à ruban traditionnelles pour couper une barre d'acier.

16. Dispositif suivant la revendication 1, dans lequel les volants d'entraînement ont un axe de rotation horizontal et la lame/les lames de guidage sont disposés horizontalement, la coupe du granit étant effectuée par un mouvement relatif des lames en direction du bloc sur un plan parallèle aux axes de rotation des volants, cet agencement ne nécessitant pas lesdits moyens d'orientation du ruban et permettant de former des systèmes coupants à lames multiples avec la possibilité de modifier facilement la distance entre les lames et, en conséquence, l'épaisseur des dalles.

17. Dispositif suivant les revendication 13 ou 15, dans lequel la coupe est effectué au moyen de la lame se déplaçant vers le bloc de granit fixe ou vice-versa.
